# FASCICULE DE BREVET EUROPEEN

(11) **EP 1 826 283 B1**
(45) Date de publication et mention de la délivrance du brevet: **05.05.2010**
(21) Numéro de dépôt: 07290197.8
(22) Date de dépôt: 16.02.2007
(51) Int. Cl.: C22C 19/03, C01B 6/24, H01M 4/24, H01M 4/38

(54) **Alliage hydrurable pour accumulateur alcalin**
Wasserstoffaufnehmende Legierung für alkalischen Akkumulator
Hydridable alloy for alkaline storage battery

(30) Priorité: 28.02.2006 FR 0601751
(43) Date de publication de la demande: 29.08.2007
(73) Titulaire: Saft Groupe S.A., 93170 Bagnolet (FR); Centre National de la Recherche Scientifique (CNRS), 75794 Paris Cedex 16 (FR)
(72) Inventeur: Bernard, Patrick, 33000 Bordeaux (FR); Knosp, Bernard, 92250 La Garenne Colombes (FR); Latroche, Michel, 78210 Saint-Cyr-L'Ecole (FR); Ferey, Amélie, 91440 Bures-sur-Yvette (FR)
(74) Mandataire: Vieillefosse, Jean-Claude

(56) Documents cités:
- EP-A2- 1 026 764
- JP-A- 11 100 601
- JP-A- 2004 115 870
- US-A1- 2004 134 569
- US-A1- 2004 146 782
- US-A1- 2005 100 789
- US-A1- 2005 164 083
- US-A1- 2005 175 896
- US-B1- 6 214 492

## Description

### DOMAINE TECHNIQUE

L'invention a pour objet un alliage hydrurable comprenant au moins une phase cristalline de type A₅B₁₉, et un accumulateur alcalin de type nickel métal hydrure comprenant au moins une électrode négative (anode) contenant ledit alliage. Un tel accumulateur possède une capacité électrochimique plus élevée que les accumulateurs nickel métal hydrure de l'art antérieur ainsi qu'une meilleure durée de vie.

### ETAT DE LA TECHNIQUE

Les applications portables demandent des besoins croissants d'énergie volumique et de puissance à bas coût comme dans les outils sans fil par exemple. Actuellement les accumulateurs atteignent une limitation en terme d'énergie volumique, du fait de l'optimisation des énergies volumiques de chacune des deux électrodes constitutives de l'accumulateur: électrode positive à base d'hydroxyde de nickel et électrode négative à base d'alliage hydrurable AB₅. La capacité massique d'un alliage de type AB₅ est limitée à 300-320 mAh/g.

Quand une optimisation de la capacité de l'accumulateur est réalisée, c'est au détriment de la durée de vie. Inversement, il est possible de réaliser une optimisation de la durée de vie de l'accumulateur, mais au détriment de la capacité volumique.

Pour augmenter la capacité volumique, des compositions telles que les familles d'alliage AB₂ ont été étudiées. Toutefois, bien que leur capacité initiale soit plus importante que celle d'un alliage AB₅, leur puissance et leur durée de vie sont considérablement réduites. Récemment certains fabricants ont proposé l'utilisation d'un alliage de type A₂B₇. Les documents suivants décrivent des alliages de type A₂B₇.

JP2001-316744 décrit un alliage hydrurable ayant pour formule Ln₁₋ₓMgₓ(Ni_{1-y}T_{y})_{z} dans laquelle Ln est au moins un élément choisi dans la série des lanthanides, Ca, Sr, Sc, Y, Ti, Zr et la quantité de lanthane représente de 10 à 50 % atom. des lanthanides.

T est au moins un élément choisi parmi Li, V, Nb, Ta, Cr, Mo, Mn, Fe, Co, Al, Ga, Zn, Sn, In, Cu, Si, P et B ; et x, y et z satisfont les relations :
0,05 ≤ x <0,20 ; 0 ≤ y ≤ 0,5 et 2,8 ≤ z ≤ 3,9.

JP2002-069554 décrit un alliage hydrurable de formule R₁₋ₐMgₐNi_{b}Co_{c}M_{d} dans laquelle R représente au moins deux éléments de terres rares. R peut également contenir de l'yttrium. M représente un ou plusieurs éléments choisis parmi Mn, Fe, V, Cr, Nb, Al, Ga, Zn, Sn, Cu, Si, P et B. Les indices stoechiométriques a, b, c et d satisfont les relations suivantes :
0,15<a<0,35 ; 0≤c≤1,5 ; 0≤d≤0,2 ; et 2,9<b+c+d<3,5.

EP-A-1 026 764 décrit un alliage hydrurable de formule AMₓ, où A peut être un élément de terres rares et/ou du magnésium et M est un ou plusieurs éléments pouvant être choisis parmi Cr, Mn, Fe, Co, Ni, Al, Cu et Sn et x satisfait la relation : 2,7 < x < 3,8.

US 6 214 492 décrit un alliage hydrurable comprenant au moins une phase cristalline consistant en un motif unitaire possédant au moins une sous unité de type A₂B₄ et au moins une sous unité de type AB₅. Cet alliage peut éventuellement comprendre une phase cristalline du type AB₃ ou de type AB_{3,5}.

US2004/0134569 décrit un alliage hydrurable de formule Ln₁₋ₓMgₓNi_{y-a}Alₐ dans laquelle Ln est au moins un élément de terres rares ; et x, y et a satisfont les relations :
0,05 ≤ x < 0,20 ; 2,8 ≤ y ≤ 3,9 et 0,10 ≤ a ≤ 0,25.

US2004/0146782 décrit un alliage hydrurable de formule Ln₁₋ₓMgₓNi_{y-a}Alₐ dans laquelle Ln est au moins un élément de terres rares ; M est choisi parmi le groupe consistant en Al, V, Nb, Ta, Cr, Mo, Mn, Fe, Co, Ga, Zn, Sn, In, Cu, Si et P; et x, y et a satisfont les relations :
0,05 ≤ x < 0,20 ; 2,8 ≤ y ≤ 3,9 et 0,10 ≤ a ≤ 0,50.

US2005/0100789 décrit un alliage hydrurable de formule RE₁₋ₓMgₓNi_{y}Al_{z}Mₐ dans laquelle RE est un élément de terres rares ; M est un élément autre qu'une terre rare; et x, y, z et a satisfont les relations:
0,10 ≤ x < 0,30 ; 2,8 ≤ y ≤ 3,6 ; 0 ≤ z ≤ 0,30 et
3,0 ≤ y+z+a ≤ 3,6.

US2005/0175896 décrit un alliage hydrurable de formule Ln₁₋ₓMgₓNi_{y-a}Alₐ dans laquelle Ln est un élément de terres rares ; et x, y et a satisfont les relations :
0,05 ≤ x < 0,20 ; 2,8 ≤ y ≤ 3,9 ; et 0,10 ≤ a ≤ 0,25. De préférence, une partie de l'élément de terres rares ou Ni est substitué par au moins un élément choisi dans le groupe consistant en V, Nb, Ta, Cr, Mo, Mn, Fe, Co, Ga, Zn, Sn, In, Cu, Si, P et B.

US2005/0164083 décrit un alliage hydrurable de formule Ln₁₋ₓMgₓNi_{y-a}Alₐ dans laquelle Ln est au moins un élément de terres rares ; et x, y et a satisfont les relations :
0,15 ≤ x ≤ 0,25 ; 3,0 ≤ y ≤ 3,6 ; et 0 < a ≤ 0,3. De préférence, une partie de l'élément de terres rares ou Ni est substitué par au moins un élément choisi dans le groupe consistant en V, Nb, Ta, Cr, Mo, Mn, Fe, Co, Ga, Zn, Sn, In, Cu, Si, P et B.

JP 09-194971 décrit un alliage hydrurable représenté par la formule : R₂(Ni_{7-x-y-z}MnₓA_{y}B_{z})ₙ dans laquelle R est un élément de terres rares ou un mischmétal ; A est un ou plusieurs éléments choisis parmi Co, Cr, Fe, Al, Zr, W, Mo, et Ti ; B est un ou plusieurs éléments choisis parmi Cu, Nb et V ; X, Y, Z et n satisfont les relations :
0,3 ≤ X ≤1,5 ; 0 ≤ Y ≤ 1,0 ; 0 ≤ Z ≤ 1,0 ; Y+Z ≤ 1,0 ; 0,96 ≤ n ≤ 1,1.

EP-A-0 783 040 décrit un alliage hydrurable de formule (R₁₋ₓLₓ) (Ni_{1-y}M_{y})_{z} dans laquelle R représente La, Ce, Pr ou Nd ; L représente Gd, Tb, Dy, Ho, Er, Tm, Yb, Lu, Y, Sc, Mg ou Ca; M représente Co, Al, Mn, Fe, Cu, Zr, Ti, Mo, Si, V, Cr, Nb, Hf, Ta, W, B ou C ; et x, y et z satisfont les relations :
0, 05 ≤ x ≤ 0,4 ; 0 ≤ y ≤ 0,5 ; et 3,0 ≤ z ≤ 4,5.

JP 2004-115870 décrit un alliage hydrurable de formule Ln₁₋ₓMgₓNi_{y}M_{z} dans laquelle Ln est Y, Sc ou un élément de terres rares ; M est Co, Mn, Al, Fe, V, Cr, Nb, Ga, Zn, Sn, Cu, Si, P ou B; et x, y, et z satisfont les relations :
0,1 ≤ x ≤ 0,5 ; 2,5 ≤ y ≤ 3,5 et 0 ≤z≤0,5 ;
et 3,0 ≤ y+z ≤ 3,5

Toutefois, bien que la capacité initiale des alliages A₂B₇ soit supérieure à celle d'un alliage AB₅ et comparable à celle d'un alliage AB₂, leur durée de vie est limitée.

On recherche donc un accumulateur alcalin de type nickel métal hydrure possédant une capacité plus élevée que celle des accumulateurs de l'art antérieur ainsi qu'une durée de vie élevée.

### RESUME DE L'INVENTION

L'invention fournit donc un alliage hydrurable comportant au moins une phase cristalline de type A₅B₁₉ ayant pour formule R_{1-y}Mg_{y}Ni_{3,8±0,1-z}M_{z}, dans laquelle :
R représente un ou plusieurs éléments choisis parmi La, Ce, Nd ou Pr ;
M représente un ou plusieurs éléments choisis parmi Mn, Fe, Al, Co, Cu, Zr, Sn et M ne contient pas Cr; 0,15 < y ≤ 0,30 ;
z ≤ 0,5

L'invention s'étend à une électrode comprenant une matière active comprenant ledit alliage. Elle s'étend également à un accumulateur alcalin nickel métal hydrure comprenant au moins une électrode négative comprenant ledit alliage.

L'invention concerne aussi le procédé de fabrication dudit alliage.

### EXPOSE DETAILLE DE MODES DE REALISATION DE L'INVENTION

L'alliage hydrurable selon l'invention contient au moins une phase cristalline de type A₅B₁₉, répondant à la formule :

R_{1-y}Mg_{y}Ni_{3,8±0,1-z}M_{z},

où
R représente un ou plusieurs éléments choisis parmi La, Ce, Nd ou Pr ;
M représente un ou plusieurs substituants du nickel choisis parmi les éléments Mn, Fe, Al, Co, Cu, Zr, Sn, et
M ne contient pas l'élément Cr.
0,15 < y ≤ 0,30 ;
z ≤ 0,5

La présence de l'élément Cr comme substituant du nickel est exclue de l'invention car la présence de Cr réduit la puissance délivrée par l'accumulateur.

La composition de l'alliage peut être confirmée par analyse élémentaire (absorption atomique, technique de plasma inductif), par diffraction des rayons X, par microsonde électronique (Electron Probe Microanalysis EPMA) avec analyse dispersive en longueur d'onde (Wavelength Dispersive Spectroscopy wDS).

Selon un mode de réalisation préféré, la somme des indices stoechiométriques du nickel et de M est 3,8.

Selon un mode de réalisation, y ≤ 0,25.

Selon un mode de réalisation, z ≤ 0,30.

Selon un mode de réalisation, l'indice stoechiométrique de chacun des substituants du nickel est inférieur ou égal à 0,20 ; de préférence il est inférieur ou égal à 0,15.

Selon un mode de réalisation, M représente un ou plusieurs éléments choisis parmi Co, Al et Mn.

Selon un mode préféré de réalisation, M est CoₐAl_{b} avec a ≤ 0,15 et b ≤ 0,15.

Selon un mode de réalisation, l'alliage hydrurable comprend la phase cristalline A₅B₁₉ telle que décrite précédemment et sa composition globale a pour formule:

R₁₋ᵤMgᵤNiₜ₋ᵥMᵥ,

où
0 ≤ u ≤ 0,25 ;
3,5 ≤ t ≤ 4,3 ;
v ≤ 0,5

Selon un mode préféré de réalisation, la proportion de phase cristalline A₅B₁₉ représente au moins 50% en volume de l'alliage.

Selon un deuxième mode de réalisation préféré, la pression d'équilibre à 40°C pour 1% en masse d'hydrogène inséré est inférieure à 1,5 bar

Selon un mode de réalisation, la taille des particules d'alliage hydrurable est caractérisée par un Dv 50% de 30 à 120 µm, de préférence de 50 à 100 µm.

Selon un autre mode de réalisation, la taille des particules d'alliage hydrurable est caractérisée par un Dv 50% de 120 à 200 µm.

L'alliage de l'invention peut être élaboré par les trois procédés suivants :
- par fusion des éléments simples constitutifs de l'alliage suivie d'une solidification lente (métallurgie classique), d'une trempe (solidification rapide) comme la coulée en bande ("strip casting") sur simple rouleau ou entre doubles rouleaux, d'une hypertrempe (refroidissement ultra rapide) utilisant les techniques de filage à l'état fondu ("melt spinning") ou de solidification rapide sur simple rouleau ou entre doubles rouleaux ("planar flow casting")
- par métallurgie des poudres (frittage) à partir des éléments simples ou de préalliages,
- par mécanosynthèse.

L'alliage de l'invention peut avoir subi un recuit.

L'invention propose également une électrode comprenant une matière active comprenant l'alliage tel que décrit précédemment. L'invention s'étend à un accumulateur alcalin nickel métal hydrure comprenant au moins une électrode négative comprenant l'alliage selon l'invention.

Il est avantageux pour obtenir une durée de vie encore plus élevée de l'électrode négative de mélanger à la matière active contenant l'alliage, un composé de l'yttrium. Ce composé peut être un oxyde, un hydroxyde ou un sel d'yttrium.

Le composé à base d'yttrium est choisi dans une liste non exhaustive comprenant un oxyde à base d'yttrium tel que Y₂O₃, un hydroxyde à base d'yttrium tel que Y(OH)₃ ou un sel à base d'yttrium. De préférence, le composé à base d'yttrium est l'oxyde d'yttrium Y₂O₃.

Le composé à base d'yttrium est mélangé à l'alliage en une proportion telle que la masse d'yttrium représente de 0,1 à 2 % de la masse de l'alliage, de préférence de 0,2 à 1 % de la masse d'alliage, de préférence encore de 0,2 à 0,7 % de la masse de l'alliage.

Le procédé d'ajout du composé à base d'yttrium à la matière active durant la fabrication de l'anode est simple à mettre en oeuvre industriellement. Il ne nécessite pas de dispositifs complexes.

L'anode est fabriquée en empâtant un support conducteur électrique avec une pâte constituée d'un mélange aqueux de la composition de matière active selon l'invention et d'additifs.

Le support peut être une mousse de nickel, un feuillard perforé plan ou tridimensionnel en nickel ou en acier nickelé.

Les additifs sont destinés à faciliter la mise en oeuvre ou les performances de l'anode. Ils peuvent être des épaississants tels que la carboxyméthylcellulose (CMC), l'hydroxypropylméthylcellulose (HPMC), le polyacideacrylique (PAAc), le poly(éthylèneoxyde) (PEO). Ils peuvent aussi être des liants tels que les copolymères de butadiène-styrène (SBR), le polystyrène acrylate (PSA), le polytétrafluoroéthylène (PTFE). Ils peuvent être aussi des fibres polymères, tels que polyamide, polypropylène, polyéthylène, etc, pour améliorer les propriétés mécaniques de l'électrode. Ils peuvent aussi être des agents conducteurs tels que de la poudre de nickel, de la poudre ou des fibres de carbone, des nanotubes.

Avantageusement, l'anode est recouverte d'une couche de surface destinée à améliorer la décharge à régime élevé et/ou la recombinaison de l'oxygène en fin de charge. L'invention concerne également un accumulateur alcalin nickel métal hydrure comprenant ladite au moins une anode.

L'accumulateur selon l'invention comprend typiquement au moins une anode, au moins une cathode au nickel, au moins un séparateur et un électrolyte alcalin.

La cathode est constituée de la masse active cathodique déposée sur un support qui peut être un support fritté, une mousse de nickel, un feuillard perforé plan ou tridimensionnel en nickel ou en acier nickelé.

La masse active cathodique comprend la matière active cathodique et des additifs destinés à faciliter sa mise en oeuvre ou ses performances. La matière active cathodique est un hydroxyde de nickel Ni(OH)₂ qui peut être partiellement substitué par Co, Mg et Zn. Cet hydroxyde peut être partiellement oxydé et peut être revêtu d'une couche de surface à base de composés du cobalt.

Parmi les additifs, on peut citer, sans que cette liste soit exhaustive, la carboxyméthylcellulose (CMC), l'hydroxypropylméthylcellulose (HPMC), l'hydroxypropylcellulose (HPC), l'hydroxyéthylcellulose (HEC), le polyacideacrylique (PAAc), le polystyrène maléique anhydride (SMA), les copolymères de butadiène-styrène (SBR) éventuellement carboxylé, un copolymère d'acrylonitrile et de butadiène (NBR), un copolymère de styrène, d'éthylène, de butylène et de styrène (SEBS), un terpolymère de styrène, de butadiène et de vinylpyridine (SBVR), le polystyrène acrylate (PSA), le polytétrafluoroéthylène (PTFE), un copolymère fluoré d'éthylène et de propylène (FEP), le polyhexafluoropropylène (PPHF), l'éthylvinylalcool (EVA), l'oxyde de zinc ZnO, des fibres (Ni, C, polymères), des poudres de composés à base de cobalt tels que Co, Co(OH)₂, CoO, LiₓCoO₂, HₓCoO₂, NaₓCoO₂.

Le séparateur est généralement composé de fibres en polyoléfine (par ex. polypropylène) ou polyamide poreux non-tissé.

L'électrolyte est une solution aqueuse alcaline concentrée comprenant au moins un hydroxyde (KOH, NaOH, LiOH), en une concentration généralement de l'ordre de plusieurs fois la normalité.

De façon classique on prépare les pâtes pour électrodes, on fabrique les électrodes, puis on superpose au moins une cathode, un séparateur et une anode afin de constituer le faisceau électrochimique. On introduit le faisceau électrochimique dans un godet conteneur et on l'imprègne avec un électrolyte alcalin aqueux. On ferme ensuite l'accumulateur.

L'invention concerne tout format d'accumulateurs :
format prismatique (électrodes planes) ou format cylindrique (électrodes spiralées ou concentriques).

L'accumulateur selon l'invention peut être du type ouvert (ouvert ou semi-ouvert) ou du type étanche.

L'accumulateur selon l'invention est particulièrement bien adapté comme source d'énergie pour un véhicule électrique ou un appareil portable.

### EXEMPLES

Des alliages, dont la composition globale a pour formule (La,Ce,Nd,Pr)₁₋ᵤMgᵤ(Ni,Mn,Al,Co)ₜ, sont élaborés par frittage de préalliages (La,Ce,Nd,Pr) (Ni,Mn,Al,Co)ₓ (1<x<=5) et Mg₂Ni en creusets scellés sous argon et recuits à des températures comprises entre 800 et 1100°C pour des durées comprises entre 1 h et 10 jours.

La composition élémentaire de ces alliages est indiquée dans le Tableau 1.

**Tableau 1: Composition élémentaire des alliages**

| Alliage | La | Ce | Nd | Pr | Mg | Ni | Mn | Al | Co | t |
|---|---|---|---|---|---|---|---|---|---|---|
| A | 0,7 | 0 | 0 | 0 | 0,30 | 2,80 | 0 | 0 | 0,5 | 3,3 |
| B | 0,20 | 0 | 0,20 | 0,45 | 0,15 | 3,58 | 0,02 | 0,05 | 0,05 | 3,7 |
| C | 0,60 | 0,18 | 0,07 | 0,03 | 0,12 | 4,02 | 0,13 | 0,10 | 0,25 | 4,5 |

L'alliage de l'exemple A de l'art antérieur se caractérise par un taux de Mg égal à u=0,30, une valeur de t=3,3 et une valeur de v=0,5.

L'alliage de l'exemple B suivant l'invention présente un taux de Magnésium u=0,15, une stoechiométrie t=3,7, et une substitution partielle du nickel par Mn, Al et Co au taux v=0,12.

Le taux de Magnésium de l'alliage C en dehors de l'invention est égal à u=0,12, sa stoechiométrie est égale à t=4,5 et le nickel est substitué par Mn, Al et Co au taux v=0,48.

La composition des alliages en termes de phases cristallines est déterminée au moyen du tracé des diagrammes de diffraction des rayons X, en utilisant la longueur d'onde Kα₁ du cuivre. La composition en termes de phases cristallines est déterminée en suivant la méthode de Rietveld (Rietveld, H. M., A profile refinement method for nuclear and magnetic structures. Journal of Applied Crystallography, 1969, 2, 6571). Les compositions des alliages A, B et C en termes de phases cristallines sont regroupées dans le tableau 2.

**Tableau 2 : Composition des alliages en termes de phases.**

| | **Phase (%)** | | | |
|---|---|---|---|---|
| Alliage | type A₂B₇(R) | type A₂B₇(H) | type A₅B₁₉(R) | type AB₅(H) |
| A | 0 | 100 | 0 | 0 |
| B | 9 | 1 | 82 | 8 |
| C | 11 | 7 | 24 | 58 |

L'alliage de l'exemple A de l'art antérieur n'est constitué que d'une phase A₂B₇ hexagonale A₂B₇(H) de type Ce₂Ni₇.

L'alliage de l'exemple B suivant l'invention comprend 10 % de phases de type A₂B₇ (hexagonale de type Ce₂Ni₇ ou rhomboédrique de type Gd₂Co₇), 8% de phase AB₅ hexagonale de type CaCu₅ et 82 % de phase de type A₅B₁₉ rhomboédrique de type Ce₅Co₁₉.

L'alliage C en dehors de l'invention se caractérise par la présence de 24% de phase A₅B₁₉, de 18% de phases A₂B₇ et de 58 % de phase AB₅.

Un échantillon d'alliage est enrobé dans une résine époxy puis poli. Différents points de l'échantillon poli sont analysés à l'aide d'une microsonde électronique à analyse dispersive en longueur d'onde afin d'en déterminer la composition. Le rapport B/A où B est la somme des taux de Ni et de(s) élément(s) M, et A est la somme des taux de La, Ce, Nd, Pr et Mg, est déterminé pour chaque point analysé.

Les résultats de l'analyse par microsonde électronique de la phase A₅B₁₉ des alliages A, B et C sont rassemblés dans le tableau 3.

**Tableau 3 : Composition de la phase A₅B₁₉ des alliages.**

| Alliage | La | Ce | Nd | Pr | Mg | Ni | Mn | Al | Co | B/A |
|---|---|---|---|---|---|---|---|---|---|---|
| A | Pas de phase A₅B₁₉ | | | | | | | | | |
| B | 0,16 | 0,12 | 0,14 | 0,39 | 0,19 | 3,58 | 0,03 | 0,06 | 0,07 | 3,74 |
| C | 0,45 | | 0,05 | 0,02 | 0,21 | 3,31 | 0,12 | 0,14 | 0,28 | 3,85 |

L'alliage A de l'art antérieur ne contient pas de phase A₅B₁₉.

La phase A₅B₁₉ de l'alliage B suivant l'invention présente un taux y de Mg égal à 0,19 et un taux z d'élément M égal à 0,16.

La phase A₅B₁₉ de l'alliage C en dehors de l'invention présente un taux y de Mg égal à 0,21 et un taux z d'élément M est égal à 0,54.

La capacité massique des alliages est déterminée en élément prismatique de laboratoire dont la capacité est limitée par l'anode.

Les anodes comprenant les alliages sont constituées d'un mélange de:
- 65 % (en poids) de l'alliage réduit en poudre dont la granulométrie est caractérisée par un Dv 50% correspondant à une taille de 40 µm
- 30 % (en poids) de poudre de nickel comme composé conducteur
- 5 % de PTFE comme liant

De l'oxyde d'yttrium est ajouté à l'anode 3 du tableau 4, à raison de 0,5 % d'yttrium par rapport à la masse d'alliage.

La cathode comprend un collecteur de courant de type mousse de nickel standard et une matière active constituée d'un hydroxyde de nickel partiellement substitué par Zn et Co, dont le réseau conducteur constitué de Co(OH)₂ a été préalablement formé.

L'anode et la cathode sont séparées par un séparateur en polyoléfine et une membrane destinée à empêcher une éventuelle recombinaison d'oxygène, dégagé à la cathode, sur l'anode.

L'électrolyte est une solution aqueuse de KOH à 8,7 mole/Litre.

Après une première charge de 16 h avec un courant de 40 mA par gramme d'alliage (charge de 16 h à 40 mA/g), l'alliage est activé pendant 10 cycles dans les conditions suivantes:
- Décharge à 80 mA/g, tension d'arrêt = 0,9 V.
- Recharge de 16 h à 40 mA/g
- Repos de 1 h

Ensuite, les accumulateurs sont cyclés dans les conditions suivantes :
- Décharge de 48 min à 400 mA/g, tension d'arrêt = 0,9 Volt
- Recharge à 400 mA/g pendant 52 min.

On appelle durée de vie de l'alliage le nombre de cycles correspondant à une capacité déchargée égale à 80% de la capacité maximale mesurée durant la période d'activation.

Les capacités et durées de vie en élément ouvert sont rassemblées dans le tableau 4.

**Tableau 4 : Capacité initiale déchargée et durée de vie des anodes**

| Anode | 1 | 2 | 3 | 4 |
|---|---|---|---|---|
| Alliage | A | B | B | C |
| Y₂O₃ (Y/Alliage= 0,5 % masse ) | non | non | oui | non |
| Q (mAh/g) | 367 | 358 | 355 | 323 |
| Durée de vie (cycles) | 153 | 257 | 398 | 174 |

La capacité maximale restituée pendant l'activation par l'anode 1 pour laquelle la matière active est l'alliage A de l'art antérieur est égale à 367 mAh/g. Cependant, elle décroît rapidement au cours du cyclage pour atteindre 80 % de la capacité initiale au cycle 153.

La capacité maximale restituée pendant l'activation par l'anode 2 pour laquelle la matière active est l'alliage B de l'invention est égale à 358 mAh/g. La durée de vie de cette anode 2 est de 257 cycles.

L'anode 3 contient de l'alliage B de l'invention et de l'oxyde d'yttrium. La capacité maximale restituée pendant l'activation par cette série est de 355 mAh/g et sa durée de vie est de 398 cycles.

La capacité des anodes 2 et 3 est supérieure à 320 mAh/g, qui est la capacité massique des accumulateurs Ni-MH de l'art antérieur.

L'ajout d'oxyde d'yttrium à l'anode 3 permet de prolonger la durée de vie de l'anode de 141 cycles par rapport à l'anode 2.

La capacité maximale restituée pendant l'activation par l'anode 4, pour laquelle la matière active est l'alliage C en dehors de l'invention, est égale à 323 mA/g. Ceci est attribué à la forte quantité de phase de type AB₅ contenue dans cet alliage. Sa durée de vie est limitée à 174 cycles.

## Revendications

1. Alliage hydrurable comportant au moins une phase cristalline de type A₅B₁₉ ayant pour formule R_{1-y}Mg_{y}Ni₃,_{θ±0,1-z}M_{z}, dans laquelle :
R représente un ou plusieurs éléments choisis parmi La, Ce, Nd ou Pr ;
M représente un ou plusieurs éléments choisis parmi Mn, Fe, Al, Co, Cu, Zr, Sn ; et M ne contient pas Cr ;
0,15 < y ≤ 0,30 ;
z ≤ 0,5

2. Alliage selon la revendication 1, dans lequel la somme des indices stoechiométriques du nickel et de M est 3,8.

3. Alliage selon la revendication 1 ou 2, dans lequel y ≤0,25.

4. Alliage selon l'une des revendications 1 à 3, dans lequel z ≤ 0,30.

5. Alliage selon l'une des revendications précédentes, dans lequel l'indice stoechiométrique de chacun des substituants du nickel est inférieur ou égal à 0,20.

6. Alliage selon la revendication 5, dans lequel l'indice stoechiométrique de chacun des substituants du nickel est inférieur ou égal à 0,15.

7. Alliage selon l'une des revendications précédentes, dans lequel M représente un ou plusieurs éléments choisis parmi Co, Al et Mn.

8. Alliage selon la revendication 1, dans lequel M est CoₐAl_{b} avec a ≤ 0,15 et b ≤ 0,15.

9. Alliage comprenant une phase cristalline A₅B₁₉ telle que définie dans l'une des revendications 1 à 8 et dont la composition globale a pour formule
R₁₋ᵤMgᵤNiₜ₋ᵥMᵥ,
où
0 < u ≤ 0,25 ;
3, 5 ≤ t ≤ 4,3 ;
v ≤ 0,5

10. Alliage selon la revendication 9 dans lequel la phase cristalline A₅B₁₉ représente au moins 50% en volume de l'alliage

11. Alliage selon l'une des revendications précédentes, dans lequel la pression d'équilibre à 40°C, pour 1% en masse d'hydrogène inséré, est inférieure à 1,5 bar.

12. Alliage selon l'une des revendications précédentes, dans lequel la taille des particules est **caractérisée par** un Dv 50% de 30 à 120 µm, de préférence de 50 à 100 µm.

13. Alliage selon l'une des revendications 1 à 11, dans lequel la taille des particules est **caractérisée par** un Dv 50% de 120 à 200 µm.

14. Electrode comprenant une matière active comprenant l'alliage selon l'une des revendications précédentes.

15. Electrode selon la revendication 14 comprenant en outre un composé à base d'yttrium.

16. électrode selon la revendication 15, dans laquelle le composé d'yttrium est un oxyde tel que Y₂O₃, un hydroxyde tel que Y(OH)₃ ou un sel d'yttrium.

17. Electrode selon la revendication 16, dans laquelle la masse d'yttrium représente de 0,1 à 2 % de la masse de l'alliage, de préférence de 0,2 à 1 % de la masse de l'alliage, de préférence encore de 0,2 à 0,7 % de la masse de l'alliage.

18. Accumulateur alcalin nickel métal hydrure comprenant au moins une électrode négative selon l'une des revendications 14 à 17.

19. Procédé de fabrication d'un alliage selon les revendications 1 à 13 comprenant les étapes de :
- fusion des éléments simples de l'alliage
- trempe ou hypertrempe.

20. Procédé de fabrication d'un alliage selon les revendications 1 à 13 comprenant l'étape de :
- frittage à partir des éléments simples de l'alliage ou de
- frittage à partir de préalliages.

21. Procédé de fabrication d'un alliage selon les revendications 1 à 13 comprenant une étape de mécanosynthèse.

22. Procédé selon l'une des revendications 19 à 21 pour la fabrication d'un alliage selon les revendications 1 à 13, comprenant une étape de recuit.

## Claims

1. Hydrogen-absorbing alloy comprising at least one crystalline phase of type A₅B₁₉ having the formula:
R_{1-y}Mg_{y}Ni_{3.8±0.1-z}M_{z},
in which:
- R represents one or more elements chosen from La, Ce, Nd or Pr;
- M represents one or more elements chosen from Mn, Fe, Al, Co, Cu, Zr, Sn ; and M does not contain Cr;
- 0.15<y≤0.30;
- z ≤ 0.5.

2. Alloy according to claim 1, in which the sum of the stoichiometric indices of nickel and M is 3.8.

3. Alloy according to claim 1 or 2, in which y ≤ 0.25.

4. Alloy according to one of claims 1 to 3, in which z ≤ 0.30.

5. Alloy according to one of the preceding claims, in which the stoichiometric index of each of the nickel substituents is less than or equal to 0.20.

6. Alloy according to claim 5, in which the stoichiometric index of each of the nickel substituents is less than or equal to 0.15.

7. Alloy according to one of the preceding claims, in which M represents one or more elements chosen from Co, Al and Mn.

8. Alloy according to claim 1, in which M is CoₐAl_{b}, with a ≤ 0.15 and b ≤ 0.15.

9. Alloy comprising a crystalline phase A₅B₁₉ as defined in one of claims 1 to 8 and the overall composition of which has the formula:
R₁₋ᵤM_{gu}Niₜ₋ᵥMᵥ
where
- 0 < u ≤ 0.25;
- 3.5≤ t ≤ 4.3;
- v ≤ 0.5.

10. Alloy according to claim 9, in which the crystalline phase A₅B₁₉ represents at least 50% by volume of the alloy.

11. Alloy according to one of the preceding claims, in which the equilibrium pressure at 40°C, for 1% by mass of hydrogen inserted, is less than 1.5 bar.

12. Alloy according to one of the preceding claims, in which the size of the particles is **characterized by** a Dv 50% of 30 to 120 µm, preferably of 50 to 100 µm

13. Alloy according to one of claims 1 to 11, in which the size of the particles is **characterized by** a Dv 50% of 120 to 200 µm

14. Electrode comprising an active ingredient comprising the alloy according to one of the preceding claims.

15. Electrode according to claim 14 also comprising an yttrium-based compound.

16. Electrode according to claim 15, in which the yttrium compound is an oxide such as Y₂O₃, an hydroxide such as Y(OH)₃ or an yttrium salt.

17. Electrode according to claim 16, in which the mass of yttrium represents from 0.1 to 2% of the mass of the alloy, preferably from 0.2 to 1% of the mass of the alloy, also preferably from 0.2 to 0.7% of the mass of the alloy.

18. Nickel metal hydride alkaline storage battery comprising at least one negative electrode according to one of claims 14 to 17.

19. Process for the manufacture of an alloy according to claims 1 to 13 comprising the stages of:
- melting the single elements of the alloy
- quenching or hyperquenching.

20. Process for the manufacture of an alloy according to claims 1 to 13 comprising the stage of:
- sintering from the single elements of the alloy or
- sintering from prealloys.

21. Process for the manufacture of an alloy according to claims 1 to 13 comprising a stage of mechanosynthesis.

22. Process according to one of claims 19 to 21 for the manufacture of an alloy according to claims 1 to 13, comprising an annealing stage.

## Patentansprüche

1. Wasserstoffaufnehmende Legierung, die mindestens eine kristalline Phase des Typs A₅B₁₉ umfasst und die Formel R_{1-y}Mg_{y}Ni₃,_{8±0,1-z}M_{z} aufweist, in der:
R für ein oder mehrere Elemente steht, das bzw. die aus La, Ce, Nd oder Pr ausgewählt ist bzw. sind;
M für ein oder mehrere Elemente steht, das bzw. die aus Mn, Fe, Al, Co, Cu, Zr, Sn ausgewählt ist bzw. sind; und M kein Cr enthält;
0,15 < y ≤ 0,30;
z ≤ 0,5.

2. Legierung nach Anspruch 1, in der die Summe der stöchiometrischen Indizes des Nickels und von M 3,8 beträgt.

3. Legierung nach Anspruch 1 oder 2, in der y ≤ 0,25.

4. Legierung nach einem der Ansprüche 1 bis 3, in der z ≤ 0,30.

5. Legierung nach einem der vorhergehenden Ansprüche, in der der stöchiometrische Index jedes der Substituenten des Nickels weniger als oder gleich 0,20 beträgt.

6. Legierung nach Anspruch 5, in der der stöchiometrische Index jedes der Substituenten des Nickels weniger als oder gleich 0,15 beträgt.

7. Legierung nach einem der vorhergehenden Ansprüche, in der M für ein oder mehrere Elemente steht, das bzw. die aus Co, Al und Mn ausgewählt ist bzw. sind.

8. Legierung nach Anspruch 1, in der M CoₐAl_{b} ist, mit a ≤ 0,15 und b ≤ 0,15.

9. Legierung, die eine kristalline Phase A₅B₁₉ umfasst, wie in einem der Ansprüche 1 bis 8 definiert, und deren allgemeine Zusammensetzung die folgende Formel aufweist:
R₁₋ᵤMgᵤNiₜ₋ᵥMᵥ,
wobei
0 < u ≤ 0,25;
3,5 ≤ t ≤ 4,3;
v ≤ 0,5.

10. Legierung nach Anspruch 9, in der die kristalline Phase A₅B₁₉ mindestens 50 Volumen-% der Legierung ausmacht.

11. Legierung nach einem der vorhergehenden Ansprüche, in der der Gleichgewichtsdruck bei 40 °C für 1 Massen-% des eingebrachten Wasserstoffs weniger als 1,5 bar beträgt.

12. Legierung nach einem der vorhergehenden Ansprüche, in der die Teilchengröße durch eine Dv 50 % von 30 bis 120 µm, vorzugsweise 50 bis 100 µm **gekennzeichnet** ist.

13. Legierung nach einem der Ansprüche 1 bis 11, in der die Teilchengröße durch eine Dv 50 % von 120 bis 200 µm **gekennzeichnet** ist.

14. Elektrode, die einen Aktivstoff umfasst, der die Legierung nach einem der vorhergehenden Ansprüche umfasst.

15. Elektrode nach Anspruch 14, die außerdem eine Verbindung auf Yttriumbasis umfasst.

16. Elektrode nach Anspruch 15, in der es sich bei der Yttriumverbindung um ein Yttriumoxid wie Y₂O₃, ein Yttriumhydroxid wie Y(OH)₃ oder ein Yttriumsalz handelt.

17. Elektrode nach Anspruch 16, in der die Yttriummasse 0,1 bis 2 % der Masse der Legierung, vorzugsweise 0,2 bis 1 % der Masse der Legierung, mehr bevorzugt 0,2 bis 0,7 % der Masse der Legierung ausmacht.

18. Alkalischer Nickel-Metallhydrid-Akkumulator, der mindestens eine negative Elektrode nach einem der Ansprüche 14 bis 17 umfasst.

19. Verfahren zur Herstellung einer Legierung nach den Ansprüchen 1 bis 13, das die folgenden Schritte umfasst:
- Schmelzen der einzelnen Elemente der Legierung
- Abschrecken oder Überabschrecken.

20. Verfahren zur Herstellung einer Legierung nach den Ansprüchen 1 bis 13, das den folgenden Schritt umfasst:
- Sintern aus den einzelnen Elementen der Legierung oder
- Sintern aus Vorlegierungen.

21. Verfahren zur Herstellung einer Legierung nach den Ansprüchen 1 bis 13, das einen Mechanosyntheseschritt umfasst.

22. Verfahren nach einem der Ansprüche 19 bis 21 zur Herstellung einer Legierung nach den Ansprüchen 1 bis 13, das einen Glühschritt umfasst.
